(19) **Europäisches Patentamt**
**European Patent Office**
**Office européen des brevets**

(11) **EP 4 172 579 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(51) Internationale Patentklassifikation (IPC):
**G01H 1/00** (2006.01)     **G01M 7/00** (2006.01)
**G01M 13/028** (2019.01)

(21) Anmeldenummer: **21743376.2**

(22) Anmeldetag: **23.06.2021**

(52) Gemeinsame Patentklassifikation (CPC):
**G01M 13/028; G01H 1/003; G01M 7/00**

(86) Internationale Anmeldenummer:
**PCT/EP2021/067129**

(87) Internationale Veröffentlichungsnummer:
**WO 2021/259995 (30.12.2021 Gazette 2021/52)**

(54) **VERFAHREN FÜR EINE ÜBERWACHUNG WENIGSTENS EINER DURCH EINE ROTIERENDE MASCHINE ANGETRIEBENEN ARBEITSMASCHINE**

METHOD FOR MONITORING AT LEAST ONE WORKING MACHINE DRIVEN BY A ROTATING MACHINE

PROCÉDÉ DE SURVEILLANCE D'AU MOINS UNE MACHINE DE TRAVAIL ENTRAÎNÉE PAR UNE MACHINE ROTATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2020 DE 102020116636**

(43) Veröffentlichungstag der Anmeldung:
**03.05.2023 Patentblatt 2023/18**

(73) Patentinhaber: **KSB SE & Co. KGaA**
**67227 Frankenthal (DE)**

(72) Erfinder:
• **RÜSCHOFF, Christian**
**67227 Frankenthal (DE)**
• **HAUSKE, Maximilian**
**68167 Mannheim (DE)**

(74) Vertreter: **Bals & Vogel Patentanwälte PartGmbB**
**Konrad-Zuse-Str. 4**
**44801 Bochum (DE)**

(56) Entgegenhaltungen:
EP-A1- 3 543 708          DE-A1- 102017 002 624
DE-A1- 102017 104 207     DE-A1- 102017 219 235
DE-A1- 102018 103 485     US-A1- 2018 292 255

**Beschreibung**

Die vorliegende Erfindung betrifft ein Verfahren für eine Überwachung wenigstens einer durch eine rotierende Maschine angetriebenen Arbeitsmaschine. Ferner bezieht sich die Erfindung auf ein System sowie ein Computerprogramm für eine solche Überwachung.

Bei Arbeitsmaschinen wie Pumpen ist eine Überwachung des Zustands der Arbeitsmaschine und insbesondere der rotierenden bzw. elektrischen Maschine, welche die Arbeitsmaschine antreibt, für die Gewährleistung der Funktionalität von großer Relevanz. Dabei ist es aus dem Stand der Technik bekannt, dass Diagnosegeräte bei der Arbeitsmaschine eingesetzt werden können, welche eine Messgröße an der Arbeitsmaschine erfassen und durch eine Auswertung der erfassten Messwerte Rückschlüsse auf den Zustand und konkret auf eine Drehzahl der Arbeitsmaschine ermöglichen.

Allerdings kann die Auswertung gemäß herkömmlicher Verfahren oft nur ungenau oder technisch sehr aufwendig erfolgen, da bspw. eine hohe Anzahl an erfassten Messwerten erforderlich ist. Darüber hinaus haben herkömmliche Methoden zur Bestimmung der Drehzahl den Nachteil, dass diese entweder auf einer direkten Auswertung elektrischer Messgrößen der rotierenden Maschine basieren oder bei drehzahlregulierten Arbeitsmaschinen nicht zuverlässig eingesetzt werden können.

Ein Verfahren zur Bestimmung einer Drehzahl einer Maschine ist aus dem Dokument DE 102017 104 207 A1 bekannt. Weiterhin sind Auswertungen von Schwingungen von Maschinen z. B. aus den Dokumenten EP 3 543 708 A1, DE 10 2018 103 485 A1 und US 2018/0292255 A1 bekannt. Aus dem Dokument DE 10 2017 219 235 A1 ist ferner ein Verfahren und System zum akustischen Überwachen einer Maschine bekannt, aus dem Dokument DE 10 2017 002 624 A1 ein Verfahren zur Produktionsüberwachung von mechanischen und elektromechanischen Produkten und Maschinen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Überwachung von Arbeitsmaschinen vorzuschlagen.

Die voranstehende Aufgabe wird gelöst durch ein Verfahren mit den Merkmalen des Anspruchs 1, ein System mit den Merkmalen des Anspruchs 14 sowie durch ein Computerprogramm mit den Merkmalen des Anspruchs 16. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System sowie dem erfindungsgemäßen Computerprogramm, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren für eine Überwachung wenigstens einer Arbeitsmaschine, wobei die Arbeitsmaschine durch eine rotierende, insbesondere elektrische, Maschine angetrieben wird. Die Arbeitsmaschine kann z. B. als eine Pumpe oder konkret als eine Kreiselpumpe ausgebildet sein, bei welcher die rotierende Maschine eine Pumpenwelle antreibt.

Bei dem erfindungsgemäßen Verfahren ist vorgesehen, dass nachfolgende Schritte durchgeführt werden, vorzugsweise nacheinander in der angegebenen oder in beliebiger Reihenfolge, wobei einzelne und/oder sämtliche Schritte auch wiederholt durchgeführt werden können:

- Erfassen wenigstens einer Erfassungsinformation bei der Arbeitsmaschine, wobei die Erfassungsinformation für eine Beschleunigung, insbesondere für eine mechanische Schwingung und/oder Geschwindigkeitsänderung und/oder Auslenkung, (und/oder für eine Drehzahl der rotierenden Maschine) bei der Arbeitsmaschine spezifisch ist, wobei vorzugsweise das Erfassen durch eine Überwachungsvorrichtung an der Arbeitsmaschine durchgeführt wird,

- Übertragen der Erfassungsinformation über ein Netzwerk an eine zentrale Verarbeitungsvorrichtung, wobei hierzu insbesondere eine Übertragungsvorrichtung der Überwachungsvorrichtung die Erfassungsinformation an das Netzwerk aussendet und die zentrale Verarbeitungsvorrichtung die Erfassungsinformation von der Übertragungsvorrichtung empfängt,

- Ausführen einer Verarbeitung der übertragenen Erfassungsinformation, bevorzugt durch die Verarbeitungsvorrichtung, um für die Überwachung eine Drehzahlinformation zu bestimmen, welche für eine Drehzahl der rotierenden Maschine, und insbesondere der Arbeitsmaschine, spezifisch ist.

Durch die Verarbeitung der zuvor an die zentrale Verarbeitungsvorrichtung übertragenen Erfassungsinformation kann der Vorteil erzielt werden, dass die Verarbeitung zur Bestimmung der Drehzahlinformation zentral außerhalb des Standorts der Arbeitsmaschine durchgeführt werden kann. Eine Überwachungsvorrichtung zur Erfassung der Erfassungsinformation kann daher technisch weniger komplex ausgeführt sein und einen geringeren Energieverbrauch aufweisen. Darüber hinaus kann das erfindungsgemäße Verfahren die Überwachung in besonders zuverlässiger Weise anhand der Verarbeitung ermöglichen, wobei die Verarbeitung hierzu insbesondere als eine Schwingungsanalyse der Erfassungsinformation ausgeführt ist.

Zum Erfassen der Erfassungsinformation und zum Übertragen der Erfassungsinformation kann ggf. eine Überwachungsvorrichtung, wie ein Diagnosegerät, direkt an der Arbeitsmaschine zum Einsatz kommen. Das Diagnosegerät kann dabei primär zur Erfassung dienen, sodass die Verarbeitung zumindest überwiegend durch die zentrale Verarbeitungsvorrichtung durchgeführt wird, und ggf. sogar auch auf eine nur teilweise Schwingungsanalyse der Erfassungsinformation durch die Überwachungsvorrichtung verzichtet wird. Damit ist es möglich, dass die Verarbeitung zentral durch die Verarbeitungsvorrichtung durchgeführt wird, um die technische Komplexität für die Überwachungsvorrichtung gering zu halten. Weiter ist es möglich, dass sich die Erfassungsinformation von einer elektrischen Mess- und/oder Regelgröße der rotierenden, insbesondere elektrischen, Maschine unterscheidet, sodass die Überwachung und insbesondere die Bestimmung der Drehzahlinformation ohne die Verwendung von elektrischen Messgrößen oder Parameter der Regelung der rotierenden Maschine durchgeführt werden kann. Auf einen Zugang zur rotierenden Maschine oder zur Regelung der rotierenden Maschine kann somit verzichtet werden, um das erfindungsgemäße Verfahren durchzuführen.

Die Arbeitsmaschine kann z. B. als eine Pumpenanordnung, wie eine Kreiselpumpenanordnung, ausgebildet sein. Die Arbeitsmaschine kann ferner durch eine elektrische und/oder rotierende Maschine, wie einen Asynchronmotor, angetrieben werden. Der Asynchronmotor kann hierzu als ungeregelte (d. h. bspw. am Netz laufende) oder als drehzahlgeregelte Asynchronmaschine ausgebildet sein. Bei einer drehzahlgeregelten Asynchronmaschine kann es vorgesehen sein, dass durch die Überwachungsvorrichtung bzw. für die Überwachung kein Zugriff auf eine Regelinformation (wie eine elektrische Mess- und/oder Stell- und/oder Regelgröße der rotierenden Maschine) besteht. Grundsätzlich kann es im Rahmen der Erfindung vorgesehen sein, dass eine Ermittlung der Drehzahl direkt an der rotierenden Maschine verhindert ist. So kann bspw. der räumliche Zugang zur rotierenden Maschine oder eine Auswertung einer elektrischen Messgröße der rotierenden Maschine verhindert sein. Damit ist es notwendig, die Drehzahl indirekt, z. B. über eine Auswertung der dadurch verursachten mechanischen Schwingungen an der Arbeitsmaschine, zu bestimmen. Um die Auswertung zu ermöglichen, können die Schwingungen z. B. durch wenigstens einen Schwingungssensor erfasst werden.

Die Überwachungsvorrichtung kann zur Erfassung von (mechanischen) Schwingungen mindestens einen Schwingungssensor aufweisen. Der mindestens eine Schwingungssensor kann dazu ausgeführt sein die Beschleunigungen in wenigstens eine oder wenigstens zwei oder wenigstens drei oder genau drei (insbesondere zueinander orthogonalen und/oder gleiche) Richtungen an der Arbeitsmaschine zu erfassen. Es ist möglich, dass die hieraus resultierende Erfassungsinformation durch verhältnismäßig kleine Daten (also mit reduzierter Datengröße) repräsentiert sein kann, sodass eine Übertragung der Daten über ein Netzwerk, wie das Internet, und damit die zentrale Verarbeitung möglich ist. Um die Daten mit einer reduzierten Datengröße zu erhalten, kann die Erfassungsinformation bspw. aus einer Messung des mindestens einen Schwingungssensors mit kurzer Messdauer erhalten werden. Damit kann auch ein Energieverbrauch der Überwachungsvorrichtung reduziert und auf eine technisch aufwendige Verarbeitung direkt durch die Überwachungsvorrichtung verzichtet werden. Das erfindungsgemäße Verfahren bzw. das erfindungsgemäße Überwachungssystem ermöglicht somit auch eine besonders zuverlässige und genaue digitalisierte Erfassung und/oder Auswertung von Pumpenparametern wie der Drehzahl.

Es ist möglich, dass die Überwachungsvorrichtung zur Erfassung von (mechanischen) Schwingungen wenigstens einen oder wenigstens zwei oder wenigstens drei oder genau drei Beschleunigungssensoren aufweist, um die Beschleunigungen in jeweils der gleichen (Mess-) Richtung an der Arbeitsmaschine zu erfassen. Damit kann z. B. eine redundante Erfassung der Schwingungen durch die Überwachungsvorrichtung möglich sein. Grundsätzlich können beliebig viele verschiedene oder gleiche Messrichtrichtungen an beliebig vielen räumlichen Messpunkten (den räumlichen Positionen der Beschleunigungssensoren) vorgesehen sein. Vorzugsweise erfolgt dabei die Messung durch die Beschleunigungssensoren gleichzeitig. Alternativ oder zusätzlich kann die Überwachungsvorrichtung zur Erfassung von (mechanischen) Schwingungen wenigstens einen oder wenigstens zwei oder wenigstens drei oder genau drei Beschleunigungssensoren aufweisen, um die Beschleunigungen in unterschiedlichen, und insbesondere orthogonalen, Richtungen an der Arbeitsmaschine zu erfassen. Der jeweilige Schwingungssensor kann ferner wenigstens einen der Beschleunigungssensoren aufweisen.

Die Erfassungsinformation kann als eine Schwingungsinformation ausgeführt sein, bspw. als digitale Messwerte, die aus einer Messung von mechanischen Schwingungen und/oder Beschleunigungen am Arbeitsgerät resultieren. Dies bedeutet, dass die Erfassungsinformation wenigstens eine Information über eine Schwingung der Arbeitsmaschine und/oder der rotierenden Maschine umfassen kann. Konkret kann es sich bei der Erfassungsinformation um eine Kurzzeitaufnahme von Schwingungsdaten handeln, welche bspw. in mindestens einer oder zwei oder drei Dimensionen erfolgt. Zur Erfassung der Erfassungsinformation kann entsprechend wenigstens ein Schwingungssensor dienen, welcher die Schwingungen an der Arbeitsmaschine und/oder der rotierenden Maschine misst. Die Erfassungsinformation kann - allgemein formuliert - als ein Signal mit einem sich wiederholenden Muster ausgeführt sein, wobei die Häufigkeit dieser Wiederholungen mittels einer Frequenzanalyse ausgewertet werden kann. Hierzu kann als Frequenzanalyse bspw. eine Fourier-Analyse zum Einsatz kommen, um auf diese Weise zu bestimmen, welche Frequenzanteile wie stark - also mit welcher Amplitude - in der Erfassungsinformation vorhanden sind. Damit wird die Erfassungsinformation in eine Grundfrequenz und in weiteren Frequenzen zerlegt. Die weiteren Frequenzen können ganzzahligen Vielfachen der Grundfrequenz entsprechen und somit zu den Harmonischen der Grundschwingung korrespondieren. Die Grundfrequenz kann für die Überwachung den relevanten Parameter darstellen, aus welchen sich z. B. die Drehzahl ermitteln lässt.

Die Frequenzanalyse (insbesondere in der Form einer Fouriertransformation) einer Kurzzeitaufnahme von Schwingungsdaten einer rotierenden Maschine kann verstärkte Ausprägungen an den Harmonischen der Drehfrequenz der Maschine zeigen. Somit kann erfindungsgemäß eine geschickte Verrechnung dieser Informationen genutzt werden, um zu einer robusten Drehzahlschätzung zu gelangen, welche trotz Kurzzeitdaten verbesserte Resultate in Bezug auf die Genauigkeit und Stabilität bietet. Dies hat zusätzlich den Vorteil, dass kurze Messungen zur Erfassung der Erfassungsinformation bereits ausreichen und bei der Übertragung die Erfassungsinformation durch Daten geringer Größe und/oder Menge übertragen werden kann. Auf diese Weise kann die anschließende Verarbeitung auch außerhalb der Überwachungsvorrichtung z. B. zentral in einer Verarbeitungsvorrichtung erfolgen, d. h. bspw. in der Cloud ausgeführt werden. Darüber hinaus ermöglicht es das beschriebene Vorgehen, die Schätzung der Drehzahl auch für Arbeitsmaschinen, wie drehzahlregulierte Pumpen, durchzuführen. Ferner kann durch den geringeren Aufwand zur Erfassung der Erfassungsinformation der Energieverbrauch beim Schwingungssensor reduziert werden, und somit die Überwachungsvorrichtung auch für längere Zeit batteriebetrieben werden.

Die Erfindung basiert auf der Überlegung, dass die Bestimmung der Grundfrequenz der Erfassungsinformation robuster und zuverlässiger möglich ist, wenn diese zusätzlich unter Berücksichtigung der Harmonischen durchgeführt wird. Damit basiert die Bestimmung der Drehzahlinformation nicht nur auf der Identifizierung einer Frequenz, sondern wird zusätzlich durch die Bestimmung weiterer Frequenzen gestützt. Dies kann zudem dazu führen, dass eine unerwünschte Instabilität der Verarbeitung vermieden wird. Eine instabile Frequenzbestimmung kann gemäß herkömmlicher Lösungen z. B. dann auftreten, wenn lediglich eine Frequenz anhand eines Peaks mit dem besten Signal-RauschVerhältnis im Frequenzspektrum identifiziert wird. Erfindungsgemäß können jedoch zur Frequenzbestimmung mehrere Frequenzen der Harmonischen herangezogen werden. Besonders vorteilhaft ist hierzu die Verwendung normalisierter Spitzenwerte (also Peaks) für die Berechnung eines Summenspektrums, wie es nachfolgend noch im Einzelnen beschrieben wird.

Es kann bei einem erfindungsgemäßen Verfahren möglich sein, dass als Ergebnis der Verarbeitung eine Drehzahlinformation bestimmt wird, die konkret eine Information über eine Drehzahl (bzw. Drehfrequenz) der Arbeitsmaschine und insbesondere der rotierenden Maschine bereitstellt. Die Drehzahlinformation kann z. B. die Grund- oder Drehfrequenz in Herz oder die Drehzahl in Umdrehungen pro Zeiteinheit, insbesondere Minute, wertemäßig umfassen. Diese Information kann weiterverarbeitet werden, um z. B. einen Zustand der Arbeitsmaschine zu ermitteln. Die Drehzahlinformation indiziert z. B. eine Fehlfunktion der Arbeitsmaschine. Auch kann die Drehzahlinformation ggf. dazu genutzt werden, um eine Betriebspunktschätzung für die Arbeitsmaschine durchzuführen. In Abhängigkeit von der bestimmten Drehzahlinformation kann optional eine Aktion initiiert werden, z. B. eine entsprechende Fehlermeldung an einen Benutzer oder eine automatische Abschaltung der Arbeitsmaschine, wenn die Fehlfunktion detektiert wurde.

Des Weiteren ist es denkbar, dass das Erfassen durch wenigstens oder genau einen Schwingungssensor an der Arbeitsmaschine, insbesondere für Schwingungen in einer oder zwei oder drei zueinander orthogonalen (und/oder gleichen) Richtungen, durchgeführt wird, um vorzugsweise die Erfassungsinformation in der Art von ein- oder zwei- oder dreidimensionalen Beschleunigungswerten zu bestimmen. Bspw. weist der Schwingungssensor hierzu ein bis drei (oder mehr) Beschleunigungssensoren auf, welche derart ausgerichtet sind, dass diese Beschleunigungen in den (ein oder zwei oder) drei verschiedenen (bzw. gleichen) Richtungen messen. Somit können zuverlässig die Schwingungen an der Arbeitsmaschine erfasst werden.

Es kann von Vorteil sein, wenn im Rahmen der Erfindung das Netzwerk zumindest teilweise als ein Mobilfunknetz und/oder Internet und/oder WLAN (Wireless Local Area Network) und/oder Bluetooth-Netzwerk und/oder dergleichen ausgeführt ist, ggf. auch als eine Kombination daraus, wobei vorzugsweise die Erfassungsinformation bei einer Vielzahl von Arbeitsmaschinen an unterschiedlichen Standorten erfasst und an die Verarbeitungsvorrichtung zur zentralen Verarbeitung übertragen wird. Somit kann die zentrale Verarbeitungsvorrichtung grundsätzlich mit der Vielzahl von Arbeitsmaschinen in Datenverbindung stehen, um jeweils die Erfassungsinformation zu empfangen. Die Verarbeitung kann dabei auch cloudbasiert erfolgen. Damit ist eine technisch effiziente zentrale Möglichkeit zur Verarbeitung bereitgestellt.

Ferner kann es im Rahmen der Erfindung vorgesehen sein, dass die Verarbeitung als eine Schwingungsanalyse ausgeführt ist, insbesondere um anhand einer Grundschwingung und weiterer Harmonischer der Erfassungsinformation die Drehzahlinformation zu bestimmen, vorzugsweise eine Schätzung der Drehzahl durchzuführen. Konkret kann hierbei die Frequenz der Grundschwingung die Drehzahl indizieren. Die Harmonischen können zusätzlich herangezogen werden, um die Bestimmung der Grundfrequenz und/oder die Schätzung der Drehzahl zu verbessern.

Des Weiteren ist es denkbar, dass bei der Verarbeitung durch eine Auswertung der Harmonischen die Grundschwingung ermittelt (d. h. identifiziert) wird, insbesondere um daraus (d. h. aus der ermittelten Grundschwingung) die Drehzahl zu schätzen. Die Harmonischen haben eine Frequenz, welche fest im Verhältnis zur Grundfrequenz vorliegen. Somit ist es möglich, durch die Auswertung der Harmonischen Rückschlüsse auf die Grundfrequenz zu ziehen.

Ein weiterer Vorteil im Rahmen der Erfindung ist erzielbar, wenn bei der Verarbeitung zur Bestimmung der Drehzahlinformation die nachfolgenden Schritte durchgeführt werden:

- Durchführen einer Frequenzanalyse der Erfassungsinformation, um ein Frequenzspektrum der Erfassungsinformation zu bestimmen,
- Durchführen einer Erkennung von mehreren Frequenzen im Frequenzspektrum, wobei vorzugsweise die Frequenzen einer Grundschwingung und/oder mindestens einer vorgegebenen Anzahl Harmonischer der Erfassungsinformation zugeordnet sind,
- Durchführen einer Berechnung anhand der erkannten Frequenzen, wobei die Berechnung durch die vorgegebene Anzahl der Harmonischen parametrisiert sein kann.

Wenn die Erfassungsinformation Werte für verschiedene Dimensionen aufweist, z. B. für verschiedene zueinander orthogonale Richtungen x, y und z, in den Schwingungen vorliegen, dann kann für jede dieser Dimensionen jeweils eine Frequenzanalyse durchgeführt werden. Entsprechend kann pro Frequenzanalyse ein Frequenzspektrum erhalten werden, welche jedoch optional miteinander kombiniert, z. B. durch Aufsummierung zu einem Frequenzspektrum zusammengefasst werden können. Auf diese Weise ist auch eine zusätzliche Reduzierung von Rauschen möglich. Die Berechnung kann dadurch erfolgen, dass die erkannten Harmonischen und die erkannte Grundschwingung miteinander verglichen werden, um eine Aussage über die Drehzahl zu erhalten und/oder die Frequenz der Grundschwingung (Grundfrequenz) zu identifizieren.

Es ist optional denkbar, dass das Durchführen der Erkennung von (mehreren) Frequenzen die nachfolgenden Schritte umfasst:

- Erkennen von Spitzenwerten (Peaks) im Frequenzspektrum, um bei den Spitzenwerten die Frequenzen zu erkennen, wobei insbesondere die erkannten Spitzenwerte solchen Frequenzen zugeordnet werden, die einer Harmonischen einer Grundschwingung und/oder der Grundschwingung entsprechen,
- Normalisieren der erkannten Spitzenwerte im Frequenzspektrum, um die anschließende Berechnung anhand der normalisierten Spitzenwerte durchzuführen.

Unter einer amplitudengleichen Normalisierung kann hierbei verstanden werden, dass die erkannten Spitzenwerte wertegleich gesetzt werden, sodass die Amplitude derjeweiligen Spitzenwerte zwar Einfluss auf das Erkennen hat, jedoch nicht auf die anschließende Berechnung. Die Spitzenwerte werden bspw. nur dann als solche erkannt, wenn diese bestimmten Anforderungen genügen, z. B. Maxima bilden und/oder oberhalb eines Rauschanteils der Erfassungsinformation liegen. Die Frequenzen wie die Harmonischen und/oder die Grundschwingung können dann bei dem Erkennen bspw. an der Stelle der erkannten Spitzenwerte angenommen werden. Hierzu können die Spitzenwerte z. B. auch mittels eines Schwellenwerts oder dergleichen erkannt werden.

In einer weiteren Möglichkeit kann vorgesehen sein, dass die (anschließende) Berechnung die Bildung eines Summenspektrums umfasst, bei welcher eine Addition der erkannten Frequenzen, insbesondere der normalisierten Spitzenwerte, gewichtet durchgeführt wird. Dies stellt eine zuverlässige Möglichkeit dar, die Drehzahlinformation und insbesondere die Grundfrequenz unter Berücksichtigung der Harmonischen zu bestimmen (d. h. zu identifizieren). Dies kann ferner auch als rauschunterdrückende Maßnahme dienen, um die Zuverlässigkeit der Frequenzbestimmung zu verbessern.

Zudem ist im Rahmen der Erfindung denkbar, dass anhand des Summenspektrums eine Frequenzbestimmung zur Bestimmung der Drehzahlinformation erfolgt, wobei hierzu vorzugsweise bei einem Maximum des Summenspektrums die Drehfrequenz geschätzt wird. Das Maximum kann z. B. durch eine iterative Methode und/oder mittels einer Taylor-Approximation bei dem Summenspektrum ermittelt werden.

Des Weiteren ist es denkbar, dass die Erfassungsinformation in der Art von Beschleunigungswerten in mindestens ein oder zwei oder drei Dimensionen vorgesehen ist, vorzugsweise bei der Arbeitsmaschine gemessen wird. Dabei kann bei der Verarbeitung für die Dimensionen jeweils ein Frequenzspektrum aus den Beschleunigungswerten bestimmt werden, und ggf. eine Aufsummierung der Amplituden der Frequenzspektren der verschiedenen Dimensionen durchgeführt werden, um die Frequenzspektren in ein einziges (eindimensionales) aufsummiertes Frequenzspektrum zu überführen. Dieses Aufsummieren der Amplituden aller drei Koordinaten kann ebenfalls als rauschunterdrückende Maßnahme dienen.

Von weiterem Vorteil kann vorgesehen sein, dass eine Interpolation, insbesondere eine trigonometrische Interpolation, beim (aufsummierten) Frequenzspektrum durchgeführt wird, um eine bzw. die Erkennung von Frequenzen beim interpolierten Frequenzspektrum durchzuführen. Die Interpolation kann hierbei z. B. auch durch ein Zero-Padding oder dergleichen durchgeführt werden. Dies ermöglicht es, bereits aus einer geringen Anzahl von Werten der Erfassungsinformation zuverlässig die Drehzahlinformation zu bestimmen.

Es ist vorgesehen, dass bei der Verarbeitung zur Bestimmung der Drehzahlinformation eine Grundfrequenz und ganzzahlige Vielfache der Grundfrequenz der Erfassungsinformation normalisiert, und damit amplitudengleich, berücksichtigt werden, vorzugsweise gewichtet gemäß vordefinierten Gewichtungen, um die Grundfrequenz zu identifizieren und die identifizierte Grundfrequenz als Drehzahlinformation zu verwenden. Ferner kann vorgesehen sein, dass bei der Verarbeitung zur Bestimmung der Drehzahlinformation die Grundfrequenz und die ganzzahligen Vielfachen der Grundfrequenz der Erfassungsinformation erkannt und/oder gewichtet berücksichtigt werden. Es kann möglich sein, dass zunächst bei der Erkennung der Frequenzen die Grundfrequenz und die ganzzahligen Vielfache der Grundfrequenz, also die Frequenzen der Harmonischen, zwar erkannt werden, und bspw. als Spitzenwerte identifiziert werden, jedoch noch nicht die relevante Frequenz, insbesondere Grundfrequenz, identifiziert werden kann. Dies bedeutet, dass bei den erkannten Frequenzen noch nicht unterschieden werden kann, ob es sich um die Grundfrequenz oder eine Harmonische oder dergleichen handelt. Zur Identifizierung der Frequenzen kann somit die bzw. eine Berechnung durchgeführt werden, um eine konkrete Aussage treffen zu können, welche der erkannten Frequenzen die Grundfrequenz bzw. für die Drehzahlinformation von Relevanz ist.

Ebenfalls Gegenstand der Erfindung ist ein System für eine Überwachung wenigstens einer durch eine rotierende, insbesondere elektrische, Maschine angetriebenen Arbeitsmaschine,
aufweisend:

- eine Überwachungsvorrichtung für ein Erfassen wenigstens einer Erfassungsinformation (insbesondere direkt) bei der Arbeitsmaschine, wobei die wenigstens eine Erfassungsinformation für eine Beschleunigung bei der Arbeitsmaschine spezifisch ist, also bspw. für wenigstens eine mechanische Schwingung in zumindest einer Richtung,
- eine Übertragungsvorrichtung, insbesondere der Überwachungsvorrichtung, für ein Übertragen der wenigstens einen Erfassungsinformation über ein Netzwerk an eine zentrale Verarbeitungsvorrichtung, wobei die Verarbeitungsvorrichtung z. B. als eine Datenverarbeitungsanlage wie ein zentraler Server ausgeführt ist,
- die Verarbeitungsvorrichtung zum Ausführen einer (digitalen) Verarbeitung der übertragenen Erfassungsinformation, um für die Überwachung eine Drehzahlinformation zu bestimmen, welche für eine Drehzahl der rotierenden Maschine spezifisch ist.

Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, für eine Überwachung wenigstens einer durch eine rotierende, insbesondere elektrische, Maschine angetriebenen Arbeitsmaschine, umfassend Befehle, die bei der Ausführung des Computerprogramms durch eine Verarbeitungsvorrichtung diese veranlassen, die nachfolgenden Schritte auszuführen, vorzugsweise nacheinander oder in beliebiger Reihenfolge, wobei die Schritte den Verfahrensschritten eines erfindungsgemäßen Verfahrens entsprechen können:

- Empfangen wenigstens einer Erfassungsinformation von einem Netzwerk, wobei die Erfassungsinformation für eine bei der Arbeitsmaschine erfasste Beschleunigung spezifisch ist, und zuvor von einer Überwachungsvorrichtung bei der Arbeitsmaschine erfasst worden sein kann,
- Ausführen einer Verarbeitung der empfangenen Erfassungsinformation, um für die Überwachung eine Drehzahlinformation zu bestimmen, welche für eine Drehzahl der rotierenden Maschine spezifisch ist.

Damit bringt das erfindungsgemäße Computerprogramm die gleichen Vorteile mit sich, wie sie ausführlich mit Bezug auf ein erfindungsgemäßes Verfahren und System beschrieben worden sind. Konkret kann das Computerprogramm dazu ausgeführt sein, diejenigen Verfahrensschritte des erfindungsgemäßen Verfahrens auszuführen, welche durch die Verarbeitungsvorrichtung durchgeführt werden. Für die weiteren Verfahrensschritte kann ggf. ein weiteres Computerprogramm vorgesehen sein, welches durch die Überwachungsvorrichtung ausgeführt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1    eine schematische Darstellung eines erfindungsgemäßen Systems,

Fig. 2    eine schematische Darstellung zur Visualisierung eines erfindungsgemäßen Verfahrens,

Fig. 3    eine schematische Darstellung einer Erkennung von Spitzenwerten bei einem Frequenzspektrum,

Fig. 4    eine schematische Darstellung einer Normalisierung von erkannten Spitzenwerten bei einem Frequenzspektrum,

Fig. 5    eine schematische Darstellung eines Summenspektrums.

In den nachfolgenden Figuren werden für die gleichen technischen Merkmale auch von unterschiedlichen Ausführungsbeispielen die identischen Bezugszeichen verwendet.

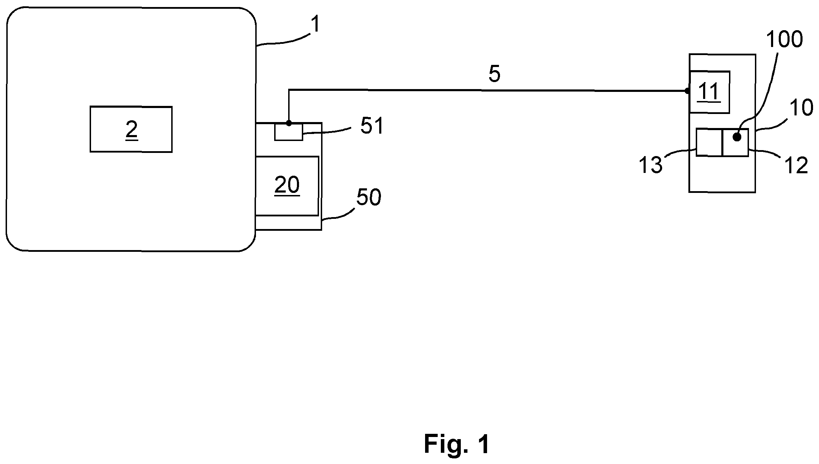

In Figur 1 ist ein System für eine Überwachung wenigstens einer durch eine rotierende Maschine 2 angetriebenen Arbeitsmaschine 1 gezeigt. Die rotierende Maschine 2 ist beispielhaft als eine elektrische Maschine 2, wie ein elektrischer Motor 2, ausgebildet. Weiter ist die Arbeitsmaschine 1 dargestellt, die bspw. in der Form einer Strömungsmaschine ausgestaltet ist. Um eine Förderung eines Mediums zu ermöglichen, kann durch die elektrische Maschine 2 eine Drehbewegung erzeugt werden, welche wiederrum Schwingungen bei der Arbeitsmaschine 1 anregt. Die Überwachung kann entsprechend darauf abzielen, anhand der Schwingung Rückschlüsse auf einen Zustand der Arbeitsmaschine 1 zu ziehen. Hierzu kann eine Überwachungsvorrichtung 50 für ein Erfassen 110 wenigstens einer Erfassungsinformation 200 bei der Arbeitsmaschine 1 vorgesehen sein. Die Überwachungsvorrichtung 50 kann herzu eine Sensorik aufweisen, um wenigstens eine Beschleunigung an der Arbeitsmaschine 1 zu messen. Somit ist die Erfassungsinformation 200 für die wenigstens eine Beschleunigung bei der Arbeitsmaschine 1 spezifisch. Dabei kann es sinnvoll sein, für die Sensorik wenigstens einen Schwingungssensor 20 einzusetzen, welcher die Beschleunigungen in einer oder mehreren Richtungen erfassen kann. Dies ermöglicht die Erfassung einer ein- oder zwei- oder auch dreidimensionalen Erfassungsinformation 200, welche dann Informationen über die Beschleunigungen in der bzw. den unterschiedlichen Richtungen aufweist. Herkömmlicherweise ist für eine zuverlässige Überwachung der Arbeitsmaschine 1 die Erfassung von umfangreichen Informationen notwendig, welche aufgrund der Datengröße nicht cloudbasiert ausgewertet werden können. Erfindungsgemäß kann die Erfassungsinformation 200 jedoch eine so geringe Datengröße aufweisen, dass eine Übertragung 120 an eine zentrale Verarbeitungsvorrichtung 10 über ein Netzwerk 5 möglich ist. Zu diesem Zweck kann eine Übertragungsvorrichtung 51 bei der Arbeitsmaschine 1 vorgesehen sein. Die Verarbeitungsvorrichtung 10 ist z. B. als eine Datenverarbeitungsanlage zum Ausführen einer Verarbeitung 130 der übertragenen Erfassungsinformation 200 ausgebildet, um für die Überwachung eine Drehzahlinformation zu bestimmen, welche für eine Drehzahl der elektrischen Maschine 2 spezifisch ist. Hierzu kann die Verarbeitungsvorrichtung 10 einen Speicher 12 aufweisen, in welchem ein Computerprogramm 100 nicht-flüchtig gespeichert ist, und von einem Prozessor 13 ausgelesen und ausgeführt werden kann. Zum Empfangen der wenigstens einen Erfassungsinformation 200 von dem Netzwerk 5 kann zudem eine Empfangsvorrichtung 11 der Verarbeitungsvorrichtung 10 vorgesehen sein.

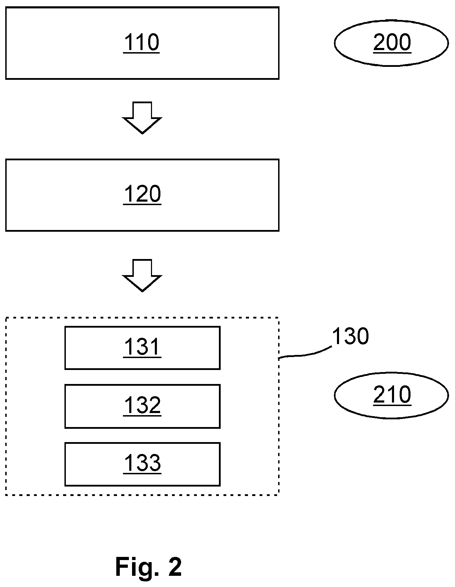

In Figur 2 gezeigt sind die Verfahrensschritte eines erfindungsgemäßen Verfahrens für die Überwachung der Arbeitsmaschine 1 mit weiteren Einzelheiten dargestellt. Gemäß einem ersten Verfahrensschritt erfolgt das Erfassen 110 der wenigstens einen Erfassungsinformation 200 bei der Arbeitsmaschine 1. Anschließend erfolgt gemäß einem zweiten Verfahrensschritt 120 das Übertragen 120 der Erfassungsinformation 200 über das Netzwerk 5 an die zentrale Verarbeitungsvorrichtung 10. Gemäß einem dritten Verfahrensschritt 130 kann sodann das Ausführen der Verarbeitung 130 der übertragenen Erfassungsinformation 200 erfolgen, um für die Überwachung die Drehzahlinformation zu bestimmen, welche für die Drehzahl der elektrischen Maschine 2 spezifisch ist. Die Verarbeitung 130 kann hierbei als eine Schwingungsanalyse ausgeführt sein, um anhand einer Grundschwingung und weiterer Harmonischer der Erfassungsinformation 200 die Drehzahlinformation zu bestimmen, und insbesondere eine Schätzung der Drehzahl durchzuführen. Bei der Verarbeitung 130 können zur Bestimmung der Drehzahlinformation zudem die nachfolgenden Schritte durchgeführt werden:

- Durchführen einer Frequenzanalyse 131 der Erfassungsinformation 200, um ein Frequenzspektrum 210 der Erfassungsinformation 200 zu bestimmen,
- Durchführen einer Erkennung 132 von mehreren Frequenzen im Frequenzspektrum 210, wobei die Frequenzen einer Grundschwingung und mindestens einer vorgegebenen Anzahl Harmonischer der Erfassungsinformation 200 zugeordnet sind,
- Durchführen einer Berechnung 133 anhand der erkannten Frequenzen, wobei die Berechnung durch die vorgegebene Anzahl der Harmonischen parametrisiert ist.

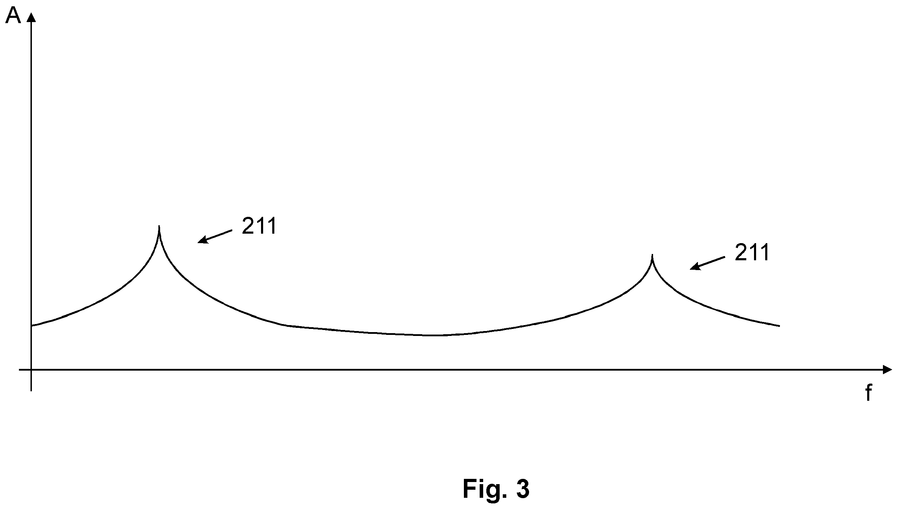

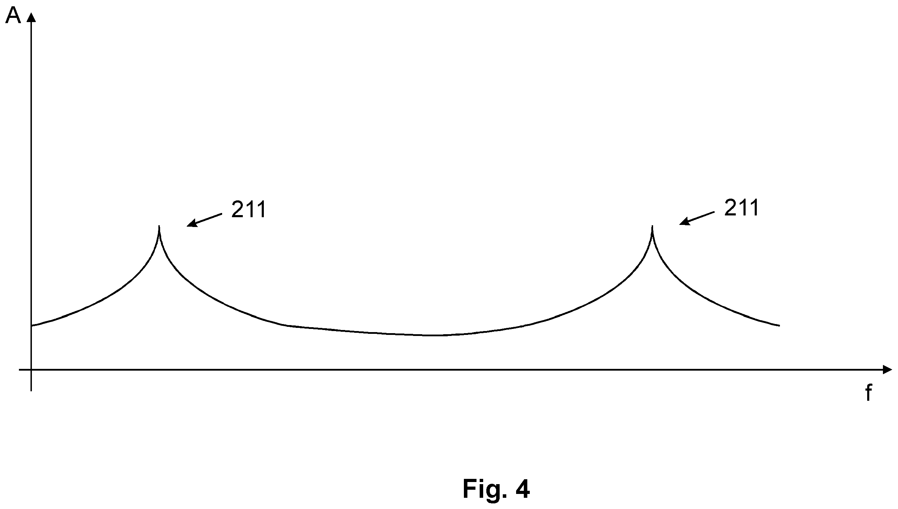

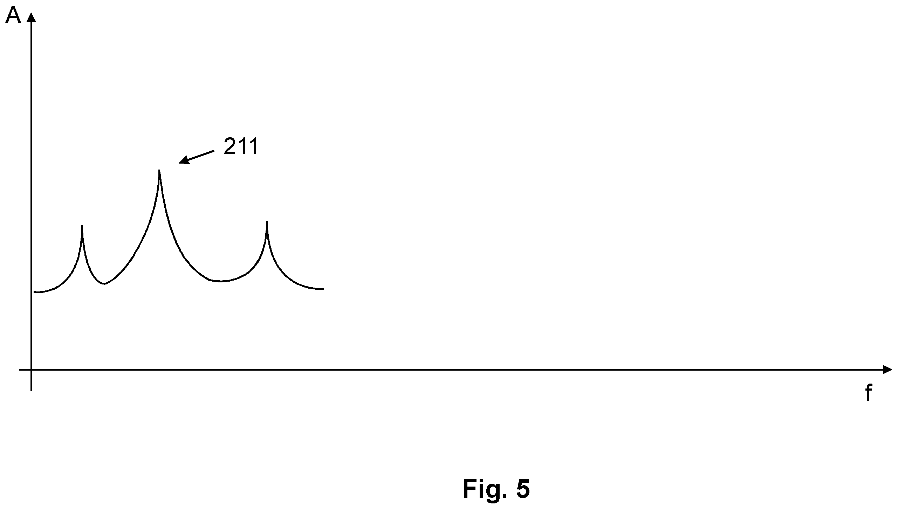

Wie in Figur 3 beispielhaft gezeigt ist, kann das Durchführen der Erkennung 132 ein Erkennen von Spitzenwerten 211 im Frequenzspektrum 210 umfassen, um bei den Spitzenwerten 211 die Frequenzen zu erkennen. Das Frequenzspektrum 210 ist in den Figuren 3 bis 5 mit der Amplitude A über die Frequenz f gezeigt. Es ist erkennbar, dass in Figur 3 die Spitzenwerte 211 gemäß der durchgehenden Linie eine unterschiedliche hohe Amplitude A aufweisen, und somit noch nicht normalisiert sind. Figur 4 zeigt, dass anschließend für die weitere Durchführung der Erkennung 132 das Normalisieren der erkannten Spitzenwerte 211 im Frequenzspektrum 210 erfolgt, um die anschließende Berechnung 133 anhand der normalisierten Spitzenwerte 211 durchzuführen. Damit werden die Spitzenwerte 211 amplitudengleich gesetzt. Die anschließende Berechnung 133 kann die in Figur 5 gezeigte Bildung eines Summenspektrums umfassen, bei welcher eine Addition der erkannten bzw. lokalisierten Frequenzen, insbesondere der normalisierten Spitzenwerte 211, gewichtet durchgeführt wird. Sodann kann anhand des Summenspektrums eine Frequenzbestimmung zur Bestimmung der Drehzahlinformation erfolgen, wobei hierzu bei einem Maximum des Summenspektrums die Drehfrequenz geschätzt wird.

Nachfolgend soll die Verarbeitung 130 mit weiteren Einzelheiten beschrieben werden. Gegeben sind z. B. als die Erfassungsinformation 200 die nachfolgenden Informationen, z. B. in der Form von N gemessenen Samples mit Beschleunigungswerten in den drei Koordinaten:

$$x, y, z \in \mathbb{R}^N.$$

N kann die Anzahl der Messwerte bezeichnen, und bspw. $2^{10}$ bei einer Abtastrate von 4 kHz betragen. Die Frequenzanalyse 131 kann nun für jede der drei Koordinaten x, y und z durchgeführt werden, jeweils als eindimensionale, ggf. aber auch als zwei- oder dreidimensionale Fouriertransformation. Nachfolgend soll exemplarisch für x eine diskrete Fourier-Transformation als die Frequenzanalyse 131 durchgeführt werden, um das zugehörige Frequenzspektrum 210 zu erhalten:

$$\hat{x} \in \mathbb{R}^N, \hat{x}_l = \sum_{0 \le k < N} x_k \cdot e^{-2\pi i \frac{kl}{N}}, 0 \le l < N.$$

Diese besitzt die kontinuierliche Fortsetzung:

$$X(b) = \sum_{0 \le k < N} x_k \cdot e^{-2\pi i \frac{kb}{N}}, b \in [0, N[ \subset \mathbb{R},$$

welche es erlaubt, auch Frequenzanteile zwischen den durch die diskrete Fourier-Transformation vorgegebenen diskreten Bins $l \in \{0,1, ..., N - 1\}$ zu berechnen.

Anschließend kann durch eine trigonometrische Interpolation von $a_l$ das interpolierte Ergebnis A erhalten werden, wobei $a_l = |\hat{x}_l|^2 + |\hat{y}_l|^2 + |\hat{z}_l|^2$, $0 \le l < \frac{N}{2}$, also durch Aufsummierung der Amplituden aller drei Koordinaten x, y und z, erhalten werden kann. Die trigonometrische Interpolation A kann wie folgt berechnet werden:

$$A(b) = X(b)\overline{X(b)} + Y(b)\overline{Y(b)} + Z(b)\overline{Z(b)}, \ b \in [0, N/2[ \subset \mathbb{R}.$$

Eine Möglichkeit zur Implementierung der Interpolation kann auch ein sogenanntes "Zero-Padding" bei der Erfassungsinformation 200 sein. Ein beispielhafter Verlauf für A(b) ist in Figur 3 mit der durchgehenden Linie gezeigt. Anschließend kann optional ein Hochpassfilter auf A(b) angewandt werden, bspw. gegeben durch $H(b) = A(b) - (A * l)(b)$, $b \in [0, N/2[ \subset \mathbb{R}$, wobei I(b) den Filterkern darstellt. Auf diese Weise kann der Rauschanteil $A * l$ reduziert und die Peaks innerhalb der Umgebung verstärkt werden.

Anschließend kann zur Erkennung 132 eine Normalisierung der relativen Peakhöhen stattfinden. Dadurch kann gewährleistet werden, dass die Harmonischen mit dem gleichen Gewicht in die Drehzahlschätzung eingehen. Dies kann wie folgt durch eine Berechnung erfolgen:

$$P(b) = E(H; b), \qquad b \in [0, N/2[ \subset \mathbb{R}$$

mit

$$E(H; b) = \log(H(b)).$$

Alternativ zum angegebenen E kann auch eine andere Funktion verwendet werden, die eine Peaknormalisierung bewirkt. P(b) ist in Figur 4 beispielhaft dargestellt.

Zur anschließenden Berechnung 133 kann das gewichtete Summenspektrum ermittelt werden:

$$S(b) = \sum_{1 \leq k \leq n_{harms}} w_k \cdot P(kb), \qquad b \in [0, \frac{N}{2n_{harms}}[, \qquad w \in \mathbb{R}^{n_{harms}}.$$

Hierbei bezeichnet $n_{harms}$ die Anzahl der zu berücksichtigen Harmonischen und w eine geeignete Gewichtung, welche z. B. empirisch ermittelt werden kann und beispielhaft auch 1 betragen kann. Die Anzahl $n_{harms}$ kann z. B. im Bereich von 10 bis 40 liegen, vorzugsweise 15 bis 35. Das Summenspektrum ist in Figur 5 beispielhaft wiedergegeben.

Anschließend kann die Schätzung der Drehzahl bzw. Drehfrequenz durch eine Frequenzbestimmung erfolgen, wobei die Drehfrequenz als das Maximum im Summenspektrum

$$f_{est} = \arg \max_{f_{min} \leq f \leq f_{max}} S(\frac{f \cdot N}{f_{sample}})$$

ermittelt werden kann. Hierbei kann $f_{sample}$ die Abtastrate des Sensors, z. B. 4 kHz, und $f_{min}$ und $f_{max}$ vordefinierte Schranken des möglichen Drehzahlbereichs bezeichnen, wie z. B. $f_{max}$ = 100/s und $f_{min}$ = 8/s.

Für eine beispielhafte Implementierung der Drehzahlbestimmung, insbesondere als Computerprogramm, bevorzugt durch die Formel $\arg \max_{f_{min} \leq f \leq f_{max}} S(\frac{f \cdot N}{f_{sample}})$, kann zu-nächst eine geeignete equidistante Diskretisierung

$$b_i = \frac{i}{M} \cdot \frac{N}{2 \cdot n_{harms}}, 0 \leq i < M$$

der Funktion S vorgenommen werden. Die Anzahl M der Diskretisierungsschritte auf dem gesamten Definitionsbereich von S sollte proportional zu N gewählt werden. Es wird ein Schätzwert definiert als

$$\tilde{f}_{est} = \arg \max_{f_{min} \leq f_i \leq f_{max}} S\left(\frac{f_i \cdot N}{f_{sample}}\right), f_i = \frac{b_i \cdot f_{sample}}{N} = \frac{i \cdot f_{sample}}{2 \cdot M \cdot n_{harm}}$$

Dieser kann als Startwert $f_{est,0} = \tilde{f}_{est}$ für ein iteratives Verfahren zur Bestimmung des exakten Werts $f_{est}$ dienen. Es können die Berechnungsschritte für n=0,1,... durchgeführt werden, und eine exakte Berechnung der Taylor-Ap-proximation $T_n$ vom Grad 2 der ersten Ableitung von S an der Stelle $f_{est,n}$ erfolgen. Anschließend kann die Berechnung der Nullstelle $f_{est,n+1}$ von $T_n$ mit negativer Steigung erfolgen. Alternativ kann auch ein Newton-Verfahren zur iterativen Bestimmung von $f_{est}$ verwendet werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

**Bezugszeichenliste**

1 Arbeitsmaschine
2 elektrische Maschine
5 Netzwerk

10 Verarbeitungsvorrichtung
11 Empfangsvorrichtung
12 Speicher
13 Prozessor

20 Schwingungssensor

50 Überwachungsvorrichtung

51  Übertragungsvorrichtung

100  Computerprogramm
110  Erfassen

120  Übertragen
130  Verarbeitung
131  Frequenzanalyse
132  Erkennung
133  Berechnung

200  Erfassungsinformation
210  Frequenzspektrum
211  Spitzenwerte

f  Frequenz
A  Amplitude

**Patentansprüche**

1. Verfahren für eine Überwachung wenigstens einer durch eine rotierende, insbesondere elektrische, Maschine (2) angetriebenen Arbeitsmaschine (1),

   wobei die nachfolgenden Schritte durchgeführt werden:

   - Erfassen (110) wenigstens einer Erfassungsinformation (200) bei der Arbeitsmaschine (1), welche für eine Beschleunigung bei der Arbeitsmaschine (1) spezifisch ist,
   - Übertragen (120) der Erfassungsinformation (200) über ein Netzwerk (5) an eine zentrale Verarbeitungsvorrichtung (10),
   - Ausführen einer Verarbeitung (130) der übertragenen Erfassungsinformation (200), um für die Überwachung eine Drehzahlinformation zu bestimmen, welche für eine Drehzahl der rotierenden Maschine (2) spezifisch ist,

   wobei bei der Verarbeitung (130) zur Bestimmung der Drehzahlinformation eine Grundfrequenz und ganzzahlige Vielfache der Grundfrequenz der Erfassungsinformation (200) normalisiert, und damit amplitudengleich, berücksichtigt werden, um die Grundfrequenz zu identifizieren und die identifizierte Grundfrequenz als Drehzahlinformation zu verwenden.

2. Verfahren nach Anspruch 1,
   **dadurch gekennzeichnet,**
   **dass** das Erfassen (110) durch einen Schwingungssensor (20) an der Arbeitsmaschine (1) für Schwingungen in drei zueinander orthogonalen Richtungen durchgeführt wird, um die Erfassungsinformation (200) in der Art von dreidimensionalen Beschleunigungswerten zu bestimmen.

3. Verfahren nach Anspruch 1 oder 2,
   **dadurch gekennzeichnet,**
   **dass** das Netzwerk (5) zumindest teilweise als ein Mobilfunknetz und/oder Internet ausgeführt ist, wobei die Erfassungsinformation (200) bei einer Vielzahl von Arbeitsmaschinen (1) an unterschiedlichen Standorten erfasst und an die Verarbeitungsvorrichtung (10) zur zentralen Verarbeitung (130) übertragen wird.

4. Verfahren nach einem der vorhergehenden Ansprüche,
   **dadurch gekennzeichnet,**
   **dass** die Verarbeitung (130) als eine Schwingungsanalyse ausgeführt ist, um anhand einer Grundschwingung und weiterer Harmonischer der Erfassungsinformation (200) die Drehzahlinformation zu bestimmen, insbesondere eine Schätzung der Drehzahl durchzuführen.

5. Verfahren nach Anspruch 4,
   **dadurch gekennzeichnet,**

**dass** bei der Verarbeitung (130) durch eine Auswertung der Harmonischen die Grundschwingung ermittelt wird, um daraus die Drehzahl zu schätzen.

6. Verfahren nach einem der vorhergehenden Ansprüche,
   **dadurch gekennzeichnet,**
   **dass** bei der Verarbeitung (130) zur Bestimmung der Drehzahlinformation die nachfolgenden Schritte durchgeführt werden:

   - Durchführen einer Frequenzanalyse (131) der Erfassungsinformation (200), um ein Frequenzspektrum (210) der Erfassungsinformation (200) zu bestimmen,
   - Durchführen einer Erkennung (132) von mehreren Frequenzen im Frequenzspektrum (210), wobei die Frequenzen einer Grundschwingung und mindestens einer vorgegebenen Anzahl Harmonischer der Erfassungsinformation (200) zugeordnet sind,
   - Durchführen einer Berechnung (133) anhand der erkannten Frequenzen, wobei die Berechnung (133) durch die vorgegebene Anzahl der Harmonischen parametrisiert ist.

7. Verfahren nach Anspruch 6,
   **dadurch gekennzeichnet,**
   **dass** das Durchführen der Erkennung (132) der Frequenzen die nachfolgenden Schritte umfasst:

   - Erkennen von Spitzenwerten (211) im Frequenzspektrum (210), um bei den Spitzenwerten (211) die Frequenzen zu erkennen,
   - Normalisieren der erkannten Spitzenwerte (211) im Frequenzspektrum (210), um die anschließende Berechnung (133) anhand der normalisierten Spitzenwerte (211) durchzuführen.

8. Verfahren nach Anspruch 6 oder 7,
   **dadurch gekennzeichnet,**
   **dass** die Berechnung (133) die Bildung eines Summenspektrums umfasst, bei welcher eine Addition der erkannten Frequenzen, insbesondere der normalisierten Spitzenwerte (211), gewichtet durchgeführt wird.

9. Verfahren nach Anspruch 8,
   **dadurch gekennzeichnet,**
   **dass** anhand des Summenspektrums eine Frequenzbestimmung zur Bestimmung der Drehzahlinformation erfolgt, wobei hierzu bei einem Maximum des Summenspektrums die Drehfrequenz geschätzt wird.

10. Verfahren nach einem der vorhergehenden Ansprüche,
    **dadurch gekennzeichnet,**
    **dass** die Erfassungsinformation (200) in der Art von Beschleunigungswerten in mindestens einer oder zwei oder drei Dimensionen vorgesehen ist, wobei bei der Verarbeitung (130) für die Dimensionen jeweils ein Frequenzspektrum (210) aus den Beschleunigungswerten bestimmt wird, und vorzugsweise eine Aufsummierung der Amplituden der Frequenzspektren (210) der verschiedenen Dimensionen durchgeführt wird, um die Frequenzspektren (210) in ein aufsummiertes Frequenzspektrum (210) zu überführen.

11. Verfahren nach Anspruch 10,
    **dadurch gekennzeichnet,**
    **dass** eine Interpolation, insbesondere eine trigonometrische Interpolation, beim aufsummierten Frequenzspektrum (210) durchgeführt wird, um eine Erkennung (132) von Frequenzen beim interpolierten Frequenzspektrum (210) durchzuführen.

12. Verfahren nach einem der vorhergehenden Ansprüche,
    **dadurch gekennzeichnet,**
    **dass** bei der Verarbeitung (130) zur Bestimmung der Drehzahlinformation die Grundfrequenz und die ganzzahligen Vielfachen der Grundfrequenz der Erfassungsinformation (200) gewichtet gemäß vordefinierten Gewichtungen berücksichtigt werden, um die Grundfrequenz zu identifizieren und die identifizierte Grundfrequenz als Drehzahlinformation zu verwenden.

13. Verfahren nach einem der Ansprüche 6 bis 12,
    **dadurch gekennzeichnet,**

**dass** die Erfassungsinformation (200) die nachfolgenden Informationen in der Form von N gemessenen Samples mit Beschleunigungswerten in den drei Koordinaten:

$$x, y, z \in \mathbb{R}^N$$

umfasst, wobei N die Anzahl der Messwerte bezeichnet, wobei die Frequenzanalyse (131) für jede der drei Koordinaten x, y und z als Fouriertransformation durchgeführt wird, wobei für x eine diskrete Fourier-Transformation als Frequenzanalyse (131) durchgeführt wird, um das zugehörige Frequenzspektrum (210) zu erhalten:

$$\hat{x} \in \mathbb{R}^N, \hat{x}_l = \sum_{0 \le k < N} x_k \cdot e^{-2\pi i \frac{kl}{N}}, 0 \le l < N,$$

wobei diese die kontinuierliche Fortsetzung besitzt:

$$X(b) = \sum_{0 \le k < N} x_k \cdot e^{-2\pi i \frac{kb}{N}}, b \in [0, N[ \subset \mathbb{R},$$

welche es erlaubt, auch Frequenzanteile zwischen den durch die diskrete Fourier-Transformation vorgegebenen diskreten Bins $l \in \{0,1, ..., N - 1\}$ zu berechnen, wobei durch eine trigonometrische Interpolation von $a_l$ das interpolierte Ergebnis A erhalten wird, wobei $a_l = |\hat{x}_l|^2 + |\hat{y}_l|^2 + |\hat{z}_l|^2$, $0 \le l < \frac{N}{2}$ erhalten wird, wobei die trigonometrische Interpolation A wie folgt berechnet wird:

$$A(b) = X(b)\overline{X(b)} + Y(b)\overline{Y(b)} + Z(b)\overline{Z(b)}, \qquad b \in [0, N/2[ \subset \mathbb{R},$$

wobei ein Hochpassfilter auf A(b), gegeben durch $H(b) = A(b) - (A * l)(b)$, $b \in [0, N/2[ \subset \mathbb{R}$, angewandt wird, wobei I(b) den Filterkern darstellt, wobei zur Erkennung (132) eine Normalisierung der relativen Peakhöhen wie folgt durch eine Berechnung erfolgt:

$$P(b) = E(H; b), \qquad b \in [0, N/2[ \subset \mathbb{R}$$

mit

$$E(H; b) = \log(H(b)),$$

wobei zur anschließenden Berechnung (133) das gewichtete Summenspektrum ermittelt wird:

$$S(b) = \sum_{1 \le k \le n_{harms}} w_k \cdot P(kb), \qquad b \in [0, \frac{N}{2n_{harms}}[, \qquad w \in \mathbb{R}^{n_{harms}},$$

wobei $n_{harms}$ die Anzahl der zu berücksichtigen Harmonischen und $w$ eine Gewichtung bezeichnet.

14. System für eine Überwachung wenigstens einer durch eine rotierende, insbesondere elektrische, Maschine (2) angetriebenen Arbeitsmaschine (1),

aufweisend:

- eine Überwachungsvorrichtung (50) für ein Erfassen (110) wenigstens einer Erfassungsinformation (200) bei der Arbeitsmaschine (1), welche für eine Beschleunigung bei der Arbeitsmaschine (1) spezifisch ist,
- eine Übertragungsvorrichtung (51) für ein Übertragen (120) der Erfassungsinformation (200) über ein Netzwerk (5) an eine zentrale Verarbeitungsvorrichtung (10),

- die Verarbeitungsvorrichtung (10) zum Ausführen einer Verarbeitung (130) der übertragenen Erfassungsinformation (200), um für die Überwachung eine Drehzahlinformation zu bestimmen, welche für eine Drehzahl der rotierenden Maschine (2) spezifisch ist,

wobei bei der Verarbeitung (130) zur Bestimmung der Drehzahlinformation eine Grundfrequenz und ganzzahlige Vielfache der Grundfrequenz der Erfassungsinformation (200) normalisiert, und damit amplitudengleich, berücksichtigt werden, um die Grundfrequenz zu identifizieren und die identifizierte Grundfrequenz als Drehzahlinformation zu verwenden.

**15.** System nach Anspruch 14,
**dadurch gekennzeichnet,**
**dass** das System zur Durchführung eines Verfahrens nach einem der Ansprüche 2 bis 13 ausgeführt ist.

**16.** Computerprogramm (100) für eine Überwachung wenigstens einer durch eine rotierende, insbesondere elektrische, Maschine (2) angetriebenen Arbeitsmaschine (1), umfassend Befehle, die bei der Ausführung des Computerprogramms (100) durch eine Verarbeitungsvorrichtung (10) diese veranlassen, die nachfolgenden Schritte auszuführen:

- Empfangen wenigstens einer Erfassungsinformation (200) von einem Netzwerk (5), wobei die Erfassungsinformation (200) für eine bei der Arbeitsmaschine (1) erfasste Beschleunigung spezifisch ist,
- Ausführen einer Verarbeitung (130) der empfangenen Erfassungsinformation (200), um für die Überwachung eine Drehzahlinformation zu bestimmen, welche für eine Drehzahl der rotierenden Maschine (2) spezifisch ist,

wobei bei der Verarbeitung (130) zur Bestimmung der Drehzahlinformation eine Grundfrequenz und ganzzahlige Vielfache der Grundfrequenz der Erfassungsinformation (200) normalisiert, und damit amplitudengleich, berücksichtigt werden, um die Grundfrequenz zu identifizieren und die identifizierte Grundfrequenz als Drehzahlinformation zu verwenden.

**Claims**

1. Method for monitoring at least one working machine (1) driven by a rotating, in particular electric, machine (2),

wherein the following steps are carried out:

- detecting (110) at least one item of detection information (200) in the working machine (1) which is specific to an acceleration in the working machine (1),
- transmitting (120) the detection information (200) via a network (5) to a central processing device (10),
- performing a processing (130) of the transmitted detection information (200) in order to determine rotational speed information for the monitoring which is specific to a rotational speed of the rotating machine (2),

wherein a fundamental frequency and integral multiples of the fundamental frequency of the detection information (200) are taken into account in a normalized manner, thus having the same amplitude, during the processing (130) in order to determine the rotational speed information, in order to identify the fundamental frequency and to use the identified fundamental frequency as rotational speed information.

2. Method according to Claim 1,
**characterized**
**in that** the detection (110) is performed by an oscillation sensor (20) on the working machine (1) for oscillations in three directions orthogonal to one another in order to determine the detection information (200) in the form of three-dimensional acceleration values.

3. Method according to Claim 1 or 2,
**characterized**
**in that** the network (5) is designed at least partially as a mobile radio network and/or Internet, wherein the detection information (200) is detected on a multiplicity of working machines (1) at different locations and is transmitted to the processing device (10) for central processing (130).

4. Method according to one of the preceding claims,

**characterized**

**in that** the processing (130) is performed as an oscillation analysis in order to determine the rotational speed information on the basis of a fundamental oscillation and further harmonics of the detection information (200), in particular in order to perform an estimation of the rotational speed.

5. Method according to Claim 4,
   **characterized**
   **in that** the fundamental oscillation is determined during the processing (130) through an evaluation of the harmonics in order to estimate the rotational speed therefrom.

6. Method according to one of the preceding claims,
   **characterized**
   **in that** the following steps are carried out during the processing (130) in order to determine the rotational speed information:

   - performing a frequency analysis (131) of the detection information (200) in order to determine a frequency spectrum (210) of the detection information (200),
   - performing an identification (132) of a plurality of frequencies in the frequency spectrum (210), wherein the frequencies are assigned to a fundamental oscillation and at least a predefined number of harmonics of the detection information (200),
   - performing a calculation (133) on the basis of the identified frequencies, wherein the calculation (133) is parameterized by the predefined number of harmonics.

7. Method according to Claim 6,
   **characterized**
   **in that** the performance of the identification (132) of the frequencies comprises the following steps:

   - identifying peak values (211) in the frequency spectrum (210) in order to identify the frequencies at the peak values (211),
   - normalizing the identified peak values (211) in the frequency spectrum (210) in order to perform the subsequent calculation (133) on the basis of the normalized peak values (211).

8. Method according to Claim 6 or 7,
   **characterized**
   **in that** the calculation (133) comprises the formation of a sum spectrum in which an addition of the identified frequencies, in particular the normalized peak values (211), is performed in a weighted manner.

9. Method according to Claim 8,
   **characterized**
   **in that** a frequency determination is performed on the basis of the sum spectrum in order to determine the rotational speed information, wherein the rotational frequency is estimated for this purpose at a maximum of the sum spectrum.

10. Method according to one of the preceding claims,
    **characterized**
    **in that** the detection information (200) is provided in the form of acceleration values in at least one or two or three dimensions, wherein a frequency spectrum (210) is determined in each case from the acceleration values during the processing (130) for the dimensions, and an accumulation of the amplitudes of the frequency spectra (210) of the different dimensions is preferably performed in order to transpose the frequency spectra (210) into a cumulative frequency spectrum (210).

11. Method according to Claim 10,
    **characterized**
    **in that** an interpolation, in particular a trigonometric interpolation, is performed in the cumulative frequency spectrum (210) in order to perform an identification (132) of frequencies in the interpolated frequency spectrum (210).

12. Method according to one of the preceding claims,
    **characterized**
    **in that** the fundamental frequency and the integral multiples of the fundamental frequency of the detection information (200) are taken into account in a weighted manner according to predefined weightings during the processing (130) in order to determine the rotational speed information, in order to identify the fundamental frequency and to use the identified fundamental frequency as rotational speed information.

13. Method according to one of Claims 6 to 12,
**characterized**

   **in that** the detection information (200) comprises the following information in the form of N measured samples with acceleration values in the three coordinates:

$$x, y, z \in \mathbb{R}^N$$

   where N denotes the number of measured values, where the frequency analysis (131) is carried out for each of the three coordinates x, y and z as a Fourier transform, where a discrete Fourier transform is carried out for x as the frequency analysis (131) in order to obtain the associated frequency spectrum (210):

$$\hat{x} \in \mathbb{R}^N, \hat{x}_l = \sum_{0 \leq k < N} x_k \cdot e^{-2\pi i \frac{kl}{N}}, 0 \leq l < N,$$

   where this has the continuous continuation:

$$X(b) = \sum_{0 \leq k < N} x_k \cdot e^{-2\pi i \frac{kb}{N}}, b \in [0, N[ \subset \mathbb{R},$$

   which allows frequency components between the discrete bins $l \in \{0, 1, ..., N - 1\}$ specified by the discrete Fourier transform also to be calculated, where the interpolated result A is obtained by means of a trigonometric interpolation of $a_l$, where $a_l = |\hat{x}_l|^2 + |\hat{y}_l|^2 + |\hat{z}_l|^2$, $0 \leq l < \frac{N}{2}$ is obtained, where the trigonometric interpolation A is calculated as follows:

$$A(b) = X(b)\overline{X(b)} + Y(b)\overline{Y(b)} + Z(b)\overline{Z(b)}, \qquad b \in [0, N/2[ \subset \mathbb{R},$$

   where a high-pass filter is applied to A(b), given by H(b) = A(b) - (A * 1)(b), $b \in [0, N/2[ \subset \mathbb{R}$, where I(b) represents the filter core, where a normalization of the relative peak heights takes place for the identification (132) by means of a calculation as follows:

$$P(b) = E(H; b), \qquad b \in [0, N/2[ \subset \mathbb{R}$$

   where E(H;b) = log(H(b)),
   where the weighted sum spectrum is determined for the subsequent calculation (133):

$$S(b) = \sum_{1 \leq k \leq n_{harms}} w_k \cdot P(kb), \qquad b \in [0, \frac{N}{2n_{harms}}[, \qquad w \in \mathbb{R}^{n_{harms}},$$

   where $n_{harms}$ denotes the number of harmonics to be taken into account and w denotes a weighting.

14. System for monitoring at least one working machine (1) driven by a rotating, in particular electric, machine (2),

   having:

   - a monitoring device (50) for detecting (110) at least one item of detection information (200) in the working machine (1) which is specific to an acceleration in the working machine (1),

- a transmission device (51) for transmitting (120) the detection information (200) via a network (5) to a central processing device (10),
- the processing device (10) to perform a processing (130) of the transmitted detection information (200) in order to determine rotational speed information for the monitoring which is specific to a rotational speed of the rotating machine (2),

wherein a fundamental frequency and integral multiples of the fundamental frequency of the detection information (200) are taken into account in a normalized manner, thus having the same amplitude, during the processing (130) in order to determine the rotational speed information, in order to identify the fundamental frequency and to use the identified fundamental frequency as rotational speed information.

15. System according to Claim 14,
**characterized**
**in that** the system is designed to carry out a method according to one of Claims 2 to 13.

16. Computer program (100) for monitoring at least one working machine (1) driven by a rotating, in particular electric, machine (2), comprising instructions which, during the execution of the computer program (100) by a processing device (10), cause the latter to carry out the following steps:

- receiving at least one item of detection information (200) from a network (5), wherein the detection information (200) is specific to an acceleration detected in the working machine (1),
- performing a processing (130) of the received detection information (200) in order to determine rotational speed information for the monitoring which is specific to a rotational speed of the rotating machine (2),

wherein a fundamental frequency and integral multiples of the fundamental frequency of the detection information (200) are taken into account in a normalized manner, thus having the same amplitude, during the processing (130) in order to determine the rotational speed information, in order to identify the fundamental frequency and to use the identified fundamental frequency as rotational speed information.

**Revendications**

1. Procédé de surveillance d'au moins une machine de travail (1) entraînée par une machine rotative (2), en particulier électrique,

les étapes suivantes étant réalisées :

- détection (110) d'au moins une information de détection (200) dans la machine de travail (1), qui est spécifique d'une accélération dans la machine de travail (1),
- transmission (120) de l'information de détection (200) par l'intermédiaire d'un réseau (5) à un dispositif de traitement central (10),
- exécution d'un traitement (130) de l'information de détection (200) transmise afin de déterminer, pour la surveillance, une information de vitesse de rotation qui est spécifique d'une vitesse de rotation de la machine rotative (2),

dans lequel, lors du traitement (130) de détermination de l'information de vitesse de rotation, une fréquence fondamentale et des multiples entiers de la fréquence fondamentale de l'information de détection (200) sont normalisés, et ainsi d'amplitude égale, et sont pris en compte afin d'identifier la fréquence fondamentale et d'utiliser la fréquence fondamentale identifiée comme information de vitesse de rotation.

2. Procédé selon la revendication 1,
**caractérisé**
**en ce que** la détection (110) est réalisée par un capteur de vibrations (20) sur la machine de travail (1) pour des vibrations dans trois directions mutuellement orthogonales afin de déterminer l'information de détection (200) sous la forme de valeurs d'accélération tridimensionnelles.

3. Procédé selon la revendication 1 ou 2,
**caractérisé**

# EP 4 172 579 B1

**en ce que** le réseau (5) est réalisé au moins partiellement sous la forme d'un réseau de téléphonie mobile et/ou Internet, l'information de détection (200) étant détectée sur une pluralité de machines de travail (1) à différents emplacements et étant transmise au dispositif de traitement (10) pour un traitement central (130).

4.  Procédé selon l'une des revendications précédentes,
    **caractérisé**
    **en ce que** le traitement (130) est réalisé sous la forme d'une analyse vibratoire afin de déterminer l'information de vitesse de rotation sur la base d'une vibration fondamentale et d'autres harmoniques de l'information de détection (200), en particulier afin d'effectuer une estimation de la vitesse de rotation.

5.  Procédé selon la revendication 4,
    **caractérisé**
    **en ce que** la vibration fondamentale est déterminée lors du traitement (130) par une évaluation des harmoniques afin d'estimer la vitesse de rotation à partir de celle-ci.

6.  Procédé selon l'une des revendications précédentes,
    **caractérisé**
    **en ce que** les étapes suivantes sont réalisées lors du traitement (130) de détermination de l'information de vitesse de rotation :

    - exécution d'une analyse de fréquence (131) de l'information de détection (200) afin de déterminer un spectre de fréquence (210) de l'information de détection (200),
    - exécution d'une reconnaissance (132) de plusieurs fréquences dans le spectre de fréquence (210), les fréquences étant associées à une vibration fondamentale et à au moins un nombre prédéterminé d'harmoniques de l'information de détection (200),
    - exécution d'un calcul (133) sur la base des fréquences reconnues, le calcul (133) étant paramétré par le nombre prédéterminé d'harmoniques.

7.  Procédé selon la revendication 6,
    **caractérisé**
    **en ce que** l'exécution de la reconnaissance (132) des fréquences comprend les étapes suivantes :

    - reconnaissance de valeurs de crête (211) dans le spectre de fréquence (210) afin de reconnaître les fréquences au niveau des valeurs de crête (211),
    - normalisation des valeurs de crête (211) reconnues dans le spectre de fréquence (210) afin d'exécuter le calcul (133) suivant sur la base des valeurs de crête (211) normalisées.

8.  Procédé selon la revendication 6 ou 7,
    **caractérisé**
    **en ce que** le calcul (133) comprend le calcul d'un spectre de sommation, lors de laquelle une addition des fréquences reconnues, en particulier des valeurs de crête (211) normalisées, est exécutée de manière pondérée.

9.  Procédé selon la revendication 8,
    **caractérisé**
    **en ce qu'**une détermination de fréquence destinée à la détermination de l'information de vitesse de rotation s'effectue sur la base du spectre de sommation, la fréquence de rotation étant estimée à cet effet au niveau d'un maximum du spectre de sommation.

10. Procédé selon l'une des revendications précédentes,
    **caractérisé**
    **en ce que** l'information de détection (200) est prévue sous la forme de valeurs d'accélération dans au moins une ou deux ou trois dimensions, dans lequel, lors du traitement (130), un spectre de fréquence (210) est déterminé à partir des valeurs d'accélération pour chacune des dimensions, et une sommation des amplitudes des spectres de fréquence (210) des différentes dimensions est de préférence réalisée afin de transposer les spectres de fréquence (210) en un spectre de fréquence (210) sommé.

11. Procédé selon la revendication 10,
    **caractérisé**

17

**en ce qu'**une interpolation, en particulier une interpolation trigonométrique, est réalisée sur le spectre de fréquence sommé (210) afin d'exécuter une reconnaissance (132) de fréquences sur le spectre de fréquence (210) interpolé.

12. Procédé selon l'une des revendications précédentes,
**caractérisé**
**en ce que**, lors du traitement (130) de détermination de l'information de vitesse de rotation, une fréquence fondamentale et des multiples entiers de la fréquence fondamentale de l'information de détection (200) sont normalisés, et ainsi d'amplitude égale, et sont pris en compte afin d'identifier la fréquence fondamentale et d'utiliser la fréquence fondamentale identifiée comme information de vitesse de rotation.

13. Procédé selon l'une des revendications 6 à 12,
**caractérisé**

**en ce que** l'information de détection (200) comprend les informations suivantes sous la forme de N échantillons mesurés avec des valeurs d'accélération suivant les trois coordonnées :

$$x, y, z \in \mathbb{R}^N$$

où N désigne le nombre de valeurs de mesure, l'analyse de fréquence (131) étant réalisée pour chacune des trois coordonnées x, y et z sous forme de transformation de Fourier, une transformation de Fourier discrète étant réalisée sous forme d'analyse de fréquence (131) pour x afin d'obtenir le spectre de fréquence (210) associé :

$$\hat{x} \in \mathbb{R}^N, \hat{x}_l = \sum_{0 \le k < N} x_k \cdot e^{-2\pi i \frac{kl}{N}}, 0 \le l < N,$$

laquelle possède le prolongement continu suivant :

$$X(b) = \sum_{0 \le k < N} x_k \cdot e^{-2\pi i \frac{kb}{N}}, b \in [0, N[ \subset \mathbb{R},$$

qui permet de calculer également des composantes de fréquence entre les intervalles binaires discrets $l \in \{0,1, \ldots ,N - 1\}$ donnés par la transformation de Fourier discrète, le résultat interpolé A étant obtenu par une interpolation trigonométrique de $a_l$, de sorte que $a_l = |\hat{x}_l|^2 + |\hat{y}_l|^2 + |\hat{z}_l|^2$, $0 \le l < \frac{N}{2}$ est obtenu, l'interpolation trigonométrique A étant calculée comme suit :

$$A(b) = X(b)\overline{X(b)} + Y(b)\overline{Y(b)} + Z(b)\overline{Z(b)}, \qquad b \in [0, N/2[ \subset \mathbb{R},$$

un filtre passe-haut donné par H(b) = A(b) - (A * 1)(b), $b \in [0, N/2[ \subset \mathbb{R}$ étant appliqué à A(b), où I(b) représente le noyau du filtre, une normalisation des hauteurs de pic relatives étant effectuée pour la reconnaissance (132) par un calcul tel qu'indiqué ci-après :

$$P(b) = E(H; b), \qquad b \in [0, N/2[ \subset \mathbb{R}$$

avec E(H ;b) = log(H(b)),
le spectre de sommation pondéré étant déterminé pour le calcul (133) suivant :

$$S(b) = \sum_{1 \le k \le n_{harms}} w_k \cdot P(kb), \qquad b \in [0, \frac{N}{2n_{harms}}[, \qquad w \in \mathbb{R}^{n_{harms}},$$

où $n_{harms}$ désigne le nombre d'harmoniques à prendre en compte et w désigne une pondération.

**14.** Système de surveillance d'au moins une machine de travail (1) entraînée par une machine rotative (2), en particulier électrique,

comportant :

- un dispositif de surveillance (50) pour une détection (110) d'au moins une information de détection (200) dans la machine de travail (1), qui est spécifique d'une accélération dans la machine de travail (1),
- un dispositif de transmission (51) pour une transmission (120) de l'information de détection (200) par l'intermédiaire d'un réseau (5) à un dispositif de traitement central (10),
- le dispositif de traitement (10) pour l'exécution d'un traitement (130) de l'information de détection (200) transmise afin de déterminer, pour la surveillance, une information de vitesse de rotation qui est spécifique d'une vitesse de rotation de la machine rotative (2),

dans lequel, lors du traitement (130) de détermination de l'information de vitesse de rotation, une fréquence fondamentale et des multiples entiers de la fréquence fondamentale de l'information de détection (200) sont normalisés, et ainsi d'amplitude égale, et sont pris en compte afin d'identifier la fréquence fondamentale et d'utiliser la fréquence fondamentale identifiée comme information de vitesse de rotation.

**15.** Système selon la revendication 14,
**caractérisé**
**en ce que** le système est conçu pour mettre en œuvre un procédé selon l'une des revendications 2 à 13.

**16.** Programme informatique (100) de surveillance d'au moins une machine de travail (1) entraînée par une machine rotative (2), en particulier électrique, comprenant des instructions qui, lors de l'exécution du programme informatique (100) par un dispositif de traitement (10), amènent celui-ci à exécuter les étapes suivantes :

- réception d'au moins une information de détection (200) en provenance d'un réseau (5), l'information de détection (200) étant spécifique d'une accélération détectée au niveau de la machine de travail (1),
- exécution d'un traitement (130) de l'information de détection (200) transmise afin de déterminer, pour la surveillance, une information de vitesse de rotation qui est spécifique d'une vitesse de rotation de la machine rotative (2)

dans lequel, lors du traitement (130) de détermination de l'information de vitesse de rotation, une fréquence fondamentale et des multiples entiers de la fréquence fondamentale de l'information de détection (200) sont normalisés, et ainsi d'amplitude égale, et sont pris en compte afin d'identifier la fréquence fondamentale et d'utiliser la fréquence fondamentale identifiée comme information de vitesse de rotation.

**Fig. 1**

EP 4 172 579 B1

EP 4 172 579 B1

**Fig. 2**

Fig. 3

EP 4 172 579 B1

**Fig. 4**

Fig. 5

**IN DER BESCHREIBUNG AUFGEFÜHRTE DOKUMENTE**

**In der Beschreibung aufgeführte Patentdokumente**

- DE 102017104207 A1
- EP 3543708 A1
- DE 102018103485 A1
- US 20180292255 A1
- DE 102017219235 A1
- DE 102017002624 A1